# EUROPÄISCHE PATENTSCHRIFT

(11) **EP 2 734 420 B1**
(45) Veröffentlichungstag und Bekanntmachung des Hinweises auf die Patenterteilung: **19.06.2019**
(21) Anmeldenummer: 12731498.7
(22) Anmeldetag: 06.07.2012
(51) Int. Cl.: B60S 1/40, B60S 1/38

(54) **WISCHBLATTADAPTERSYSTEM**
WIPER BLADE ADAPTER SYSTEM
SYSTÈME ADAPTATEUR DE BALAI D'ESSUIE-GLACE

(30) Priorität: 20.07.2011 DE 102011079470
(43) Veröffentlichungstag der Anmeldung: 28.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/063268
(87) Internationale Veröffentlichungsnummer: WO 2013/010822

(56) Entgegenhaltungen:
- WO-A1-2004/098962
- DE-A1-102009 029 458
- DE-U1- 20 321 703
- US-A- 5 807 016

## Beschreibung

### Stand der Technik

Es ist bereits ein Wischblattadaptersystem mit einem Wischblattadapter eines gelenkfreien Wischblatts, der zur Kopplung mit einem Wischarmadapter zumindest einer ersten Größe vorgesehen ist, vorgeschlagen worden.

Aus der US 5,807,016 A ist ein Wischblattadaptersystem mit den Merkmalen des Oberbegriffs des Anspruchs 1 bekannt. Weiterer Stand der Technik ist aus der DE 203 21 703 U1 bekannt.

### Offenbarung der Erfindung

Die Erfindung geht aus von einem Wischblattadaptersystem mit einem Wischblattadapter eines gelenkfreien Wischblatts, der zur Kopplung mit einem Wischarmadapter zumindest einer ersten Größe vorgesehen ist.

Es wird vorgeschlagen, dass das Wischblattadaptersystem wenigstens einen Zwischenadapter aufweist, der zur Kopplung mit dem Wischblattadapter und zur Kopplung mit einem Wischarmadapter zumindest einer zweiten Größe vorgesehen ist. Dadurch kann ein Wischblatt mittels des Wischblattadapters vorteilhaft an verschieden große Wischarme montiert werden. Unter einem "gelenkfreien Wischblatt" soll insbesondere ein Wischblatt verstanden werden, das ein oder mehrere, insbesondere gebogene Federleisten aufweist und/oder insbesondere einen Wischgummi aufweist, der gelenkfrei, insbesondere über die Federleisten, mit einer Koppelstelle, insbesondere dem Wischblattadapter, verbunden ist.-Unter einer "festen Verbindung" soll insbesondere eine Verbindung verstanden werden, durch die zwei Bauteile, insbesondere der Wischblattadapter und das Wischblatt, in einem montierten Zustand verliersicher und insbesondere starr miteinander verbunden sind, wobei die beiden Bauteile dabei zerstörungsfrei untrennbar oder trennbar, beispielsweise mittels eines Formschlusses oder eines anderen, dem Fachmann als sinnvoll erscheinenden Verbindungsverfahrens miteinander verbunden sein können. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil in einem demontierten Zustand eines Wischblatts von einem Wischarm zumindest in einem Betriebszustand unverlierbar verbunden und dazu vorgesehen ist, einen Kopplungsbereich des Wischblattbauteils für eine Kopplung und/oder Kontaktierung mit einem Wischarmadapter bereitzustellen. Unter einem "Zwischenadapter" soll insbesondere ein Bauteil verstanden werden, das sowohl mit dem Wischarmadapter, als auch mit dem Wischblattadapter in Kontakt steht. Unter "vorgesehen" soll insbesondere speziell ausgelegt und/oder ausgestattet verstanden werden.

Weiter wird vorgeschlagen, dass der Zwischenadapter dazu vorgesehen ist, den Wischblattadapter in zumindest zwei Richtungen zu umschließen. Dadurch kann der Zwischenadapter besonders einfach ausgebildet werden. Unter "in zumindest zwei Richtungen umschließen" soll insbesondere verstanden werden, dass der Zwischenadapter in einem montierten Zustand den Wischblattadapter in zumindest zwei voneinander unterschiedlichen Richtungen zumindest teilweise umgibt und begrenzt.

Des Weiteren wird vorgeschlagen, dass der Zwischenadapter dazu vorgesehen ist, den Wischblattadapter in zumindest drei Richtungen zu umschließen. Dadurch kann der Zwischenadapter besonders vorteilhaft ausgebildet werden und eine besonders vorteilhafte Kopplung des Zwischenadapters mit dem Wischblattadapter und dem Wischarmadapter erreicht werden. Unter "in zumindest zwei Richtungen umschließen" soll insbesondere verstanden werden, dass der Zwischenadapter in einem montierten Zustand den Wischblattadapter in zumindest drei voneinander unterschiedlichen Richtungen zumindest teilweise umgibt und begrenzt, wobei der Zwischenadapter dabei vorteilhafterweise u-förmig ausgebildet ist.

In der Erfindung weist der Zwischenadapter zumindest eine Seitenwand auf, die zumindest eine Erhebung ausbildet. Dadurch kann der Zwischenadapter besonders vorteilhaft und mit einem geringen Gewicht gestaltet werden, wobei eine Breite des Zwischenadapters für verschieden große Wischarmadapter besonders einfach angepasst werden kann, und zwar insbesondere durch unterschiedlich große Erhebungen. Unter einer "Seitenwand" soll insbesondere eine Wand des Zwischenadapters verstanden werden, die parallel zu einer Vertikalachse verläuft und insbesondere in einem montierten Zustand zwischen dem Wischblattadapter und dem Wischarmadapter angeordnet ist. Unter einer "Vertikalachse" soll insbesondere eine Achse verstanden werden, die sich orthogonal zu einer Längsachse und orthogonal zu einer Wischrichtung erstreckt. Unter einer "Längsachse" soll in diesem Zusammenhang insbesondere eine Richtung verstanden werden, die sich im Wesentlichen parallel zu einer Längserstreckung des Wischblatts erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einer "Wischrichtung" soll in diesem Zusammenhang insbesondere eine Richtung verstanden werden, die sich parallel zu einer zu wischenden Oberfläche und/oder senkrecht zu einer Hauptausrichtung der Wischleiste erstreckt. Unter einer "Erhebung" soll insbesondere eine Materialansammlung verstanden werden, die sich von einem Grundkörper, insbesondere der Seitenwand, abhebt, wobei die Erhebung dabei die Form einer Strebe, einer Noppe oder eine andere, dem Fachmann als sinnvoll erscheinende Form aufweisen kann.

Weiterhin ist zumindest eine Erhebung der zumindest einen Seitenwand als eine Vertikalstrebe ausgebildet. Dadurch kann die zumindest eine Erhebung besonders vorteilhaft ausgestaltet werden. Unter einer "Vertikalstrebe" soll insbesondere eine Strebe verstanden werden, die parallel zu der Vertikalachse verläuft, also deren Haupterstreckungsrichtung im Wesentlichen parallel zu der Vertikalachse ausgerichtet ist.

Zudem wird vorgeschlagen, dass die zumindest eine Seitenwand des Zwischenadapters eine Aufnahme aufweist, die dazu vorgesehen ist, in einem montierten Zustand ein Befestigungselement aufzunehmen. Dadurch kann der Zwischenadapter besonders vorteilhaft mit dem Wischblattadapter gekoppelt werden. Unter einem "Befestigungselement" soll dabei insbesondere ein Element zur Verbindung zweier Bauteile, wie insbesondere eine Schraube, ein Bolzen, ein Stift oder ein anderes, dem Fachmann als sinnvoll erscheinendes Verbindungselement, verstanden werden.

Des Weiteren wird vorgeschlagen, dass der Zwischenadapter zumindest ein Mittelstück aufweist, das den Zwischenadapter in Richtung des Wischarmadapters begrenzt. Dadurch kann der Zwischenadapter besonders vorteilhaft und einfach u-förmig ausgebildet werden.

Ferner wird vorgeschlagen, dass das Mittelstück aus drei Verbindungsstreben gebildet ist, die die zumindest eine Seitenwand und eine weitere Seitenwand miteinander verbinden. Dadurch kann der Zwischenadapter besonders einfach und mit einem geringen Gewicht ausgestaltet werden. Unter einer "Verbindungsstrebe" soll dabei insbesondere eine Verbindung zwischen den beiden Seitenwänden verstanden werden, die insbesondere maximal 60% einer Gesamtlänge, vorteilhafterweise maximal 40% der Gesamtlänge und besonders bevorzugt maximal 25% einer Gesamtlänge des Zwischenadapters überspannt. Unter einer "Gesamtlänge" soll insbesondere eine gesamte Ausdehnung des Zwischenadapters entlang der Längsachse verstanden werden.

Zudem wird vorgeschlagen, dass der Wischblattadapter zur Verbindung mit dem Wischarmadapter zumindest eine Aufnahme aufweist, die dazu vorgesehen ist, das Befestigungselement aufzunehmen. Dadurch kann der Wischblattadapter besonders vorteilhaft und einfach mit dem Wischarmadapter verbunden werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblattsystem mit einem erfindungsgemäßen Wischblattadaptersystem mit drei erfindungsgemäßen Zwischenadaptern und
- Fig. 2: ein Wischblattsystem mit einem erfindungsgemäßen Wischblattadaptersystem.

### Beschreibung des Ausführungsbeispiels

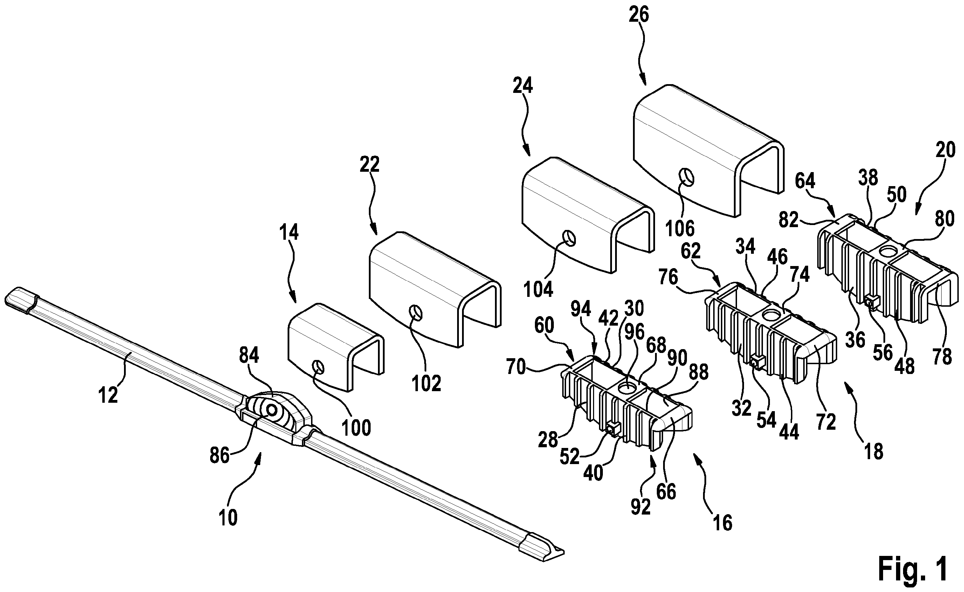

Die Figur 1 zeigt ein Wischblattsystem mit einem erfindungsgemäßen Wischblattadaptersystem. Das Wischblattsystem umfasst ein gelenkfreies Wischblatt 12. Mittels des Wischblatts 12 wird eine nicht näher dargestellte Nutzfahrzeugscheibe gewischt. Das gelenkfreie Wischblatt 12 weist eine nicht näher dargestellte Anlenkstelle auf. Das Wischblattadaptersystem umfasst einen Wischblattadapter 10, der für eine feste Verbindung mit dem gelenkfreien Wischblatt 12 vorgesehen ist. Der Wischblattadapter 10 ist über die Anlenkstelle des Wischblatts 12 fest mit dem gelenkfreien Wischblatt 12 verbunden. Dabei ist der Wischblattadapter 10 mittels einer Formschlussverbindung mit dem gelenkfreien Wischblatt 12 verbunden. Es sind ferner viele weitere, dem Fachmann als sinnvoll erscheinende Befestigungsmethoden zur Befestigung des Wischblattadapters 10 mit dem gelenkfreien Wischblatt 12 denkbar, wie insbesondere ein Einhängen des Wischblatts 12 in eine Führungsschiene des Wischblattadapters 10. Des Weiteren ist es auch denkbar, das gelenkfreie Wischblatt 12, bei entsprechender Ausgestaltung des Wischblatts 12, mit dem Wischblattadapter 10 zu verkleben, zu verschrauben und/oder zu vernieten. Grundsätzlich ist bei entsprechender Wahl der Materialien auch eine Schweiß- oder Lötverbindung für eine feste Verbindung des Wischblatts 12 mit dem Wischblattadapter 10 denkbar. Das gelenkfreie Wischblatt 12 weist eine Haupterstreckungsrichtung auf. In der Haupterstreckungsrichtung ist eine Längsachse orientiert.

Der Wischblattadapter 10 weist einen länglichen Grundkörper 84 auf. Eine Breite des Grundkörpers 84 ist zumindest im Wesentlichen gleich groß wie eine Breite des Wischblatts 12. Eine Länge des Grundköpers 84, die entlang einer Haupterstreckungsrichtung des Wischblatts 12 verläuft, ist wesentlich größer als seine Breite. Die Länge des Grundkörpers 84 ist zumindest doppelt so groß wie seine Breite. Grundsätzlich sind natürlich auch andere Maße denkbar. Der Wischblattadapter 10 weist eine Aufnahme 86 auf, die dazu vorgesehen ist, ein Befestigungselement 58 aufzunehmen. Die Aufnahme 86 ist als ein Durchgangsloch ausgebildet und liegt orthogonal zu der Längsachse. Mittels der als Durchgangsloch ausgebildeten Aufnahme 86 ist der Wischblattadapter 10 mit einem Wischarmadapter 14 verbindbar.

Der Wischblattadapter 10 ist zur Kopplung mit dem Wischarmadapter 14 einer ersten Größe eines nicht näher dargestellten Nutzfahrzeugs vorgesehen. Der Wischarmadapter 14 ist u-förmig ausgebildet. Erweist zwei Aufnahmelöcher 100 auf, mittels deren der Wischblattadapter 10 an den Wischarmadapter 14 anbindbar ist. In einem montierten Zustand ist das Befestigungselement 58 sowohl durch die Aufnahme 86 des Wischblattadapters 10 als auch durch die Aufnahmelöcher 100 des Wischarmadapters 14 geführt und mit einem weiteren Befestigungselement 98, das als eine Mutter ausgebildet ist, fixiert. Dadurch ist der Wischblattadapter 10 über das Befestigungselement 58 schwenkbar zu dem Wischarmadapter 14 gelagert. Der Wischarmadapter 14 ist Teil des Nutzfahrzeugs und fest mit einem Wischarm des Nutzfahrzeugs verbunden. Dabei ist der Wischarmadapter 14 mittels einer, dem Fachmann als sinnvoll erscheinenden Verbindungsmethode zerstörungsfrei trennbar mit dem Wischarm verbunden. Es ist grundsätzlich auch denkbar, dass der Wischarmadapter 14 einstückig mit dem Wischarm ausgebildet ist, beispielsweise indem der Wischarmadapter 14 und der Wischarm in einem Guss hergestellt sind.

In Figur 1 sind drei weitere Wischarmadapter 22, 24, 26 gezeigt, die sich in einer Größe von dem Wischarmadapter 14 unterscheiden. Wischarme und Wischarmadapter 14, 22, 24, 26 weisen bei verschiedenen Nutzfahrzeugen unterschiedliche Größen auf. Die verschiedenen Wischarmadapter 14, 22, 24, 26 unterscheiden sich dabei in ihrer Länge oder in ihrer Breite, ihrer Höhe und/oder in einer Größe des Aufnahmelochs. Dabei ist es grundsätzlich auch denkbar, dass es weitere Wischarmadapter gibt, die sich von den dargestellten Wischarmadaptern 14, 22, 24, 26 unterscheiden. Die weiteren Wischarmadapter 22, 24, 26 weisen ebenfalls jeweils zwei Aufnahmelöcher 102, 104, 106 auf, mittels deren der Wischblattadapter 10 an den jeweiligen Wischarmadapter 22, 24, 26 anbindbar ist.

Weiter umfasst das Wischblattadaptersystem einen Zwischenadapter 16, der zur Kopplung mit dem Wischblattadapter 10 und dem Wischarmadapter 22 einer zweiten Größe vorgesehen ist. Der Zwischenadapter 16 ist u-förmig ausgebildet und umschließt den Wischblattadapter 10 dabei in einem montierten Zustand in drei Richtungen. Der Zwischenadapter 16 weist dazu zwei Seitenwände 28, 30 auf, die mittels eines in einem Winkel von 90 Grad zu den Seitenwänden 28, 30 stehenden Mittelstücks 60 miteinander verbunden sind. Die Seitenwände 28, 30 sind parallel zueinander ausgerichtet. Die Seitenwände 28, 30 weisen jeweils eine Innenfläche 88, 90 auf. Ein Abstand der Seitenwände 28, 30 zueinander, ausgehend jeweils von der entsprechenden Innenfläche 88, 90, entspricht der Breite des Grundkörpers 84 des Wischblattadapters 10 plus einer Toleranz von etwa 1,0 mm. Somit kann der Zwischenadapter 16 für eine Montage über den Grundkörper 84 des Wischblattadapters 10 gesteckt werden. Der Wischblattadapter 10 ist in dem montierten Zustand zwischen den beiden Seitenwänden 28, 30 des Zwischenadapters 16 angeordnet. Dabei liegen die Innenflächen 88, 90 des Zwischenadapters 16 an einer entsprechenden Außenseite des Grundkörpers 84 des Wischblattadapters 10 an.

Die Seitenwände 28, 30 bilden an ihrer Außenseite jeweils Erhebungen 40, 42 aus. Die Erhebungen 40, 42 der Seitenwände 28, 30 sind als Vertikalstreben ausgebildet. Die als Vertikalstreben ausgebildeten Erhebungen 40, 42 erstrecken sich von einem dem gelenkfreien Wischblatt 12 in montiertem Zustand zugewandten Ende 92 des Zwischenadapters 16 orthogonal zu der Längsachse bis zu einem dem gelenkfreien Wischblatt 12 in montiertem Zustand abgewandten Ende 94 des Zwischenadapters 16. Die als Vertikalstreben ausgebildeten Erhebungen 40, 42 verlaufen parallel zueinander.

Die Seitenwände 28, 30 weisen jeweils eine Aufnahme 52 auf. Die Aufnahmen 52 sind als Durchgangslöcher ausgebildet und liegen in einer Flucht zueinander. Die Aufnahmen 52 sind dazu vorgesehen, das Befestigungselement 58 in montiertem Zustand aufzunehmen. In dem montierten Zustand sind die Aufnahmen 52 der Seitenwände 28, 30 fluchtend mit der Aufnahme 86 des Wischblattadapters 10 ausgerichtet, so dass das Befestigungselement 58 sowohl in die Aufnahme 86 des Wischblattadapters 10 als auch in die Aufnahmen 52 der Seitenwände 28, 30 eingreifen kann.

Das Mittelstück 60 ist in einem montierten Zustand auf der dem gelenkfreien Wischblatt 12 abgewandten Seite des Zwischenadapters 16 angeordnet. Das Mittelstück 60 verbindet die beiden Seitenwände 28, 30 starr miteinander. Das Mittelstück 60 ist aus drei Verbindungsstreben 66, 68, 70 gebildet. Die Verbindungsstreben 66, 68, 70 verbinden die Seitenwände 28, 30 miteinander. Der Zwischenadapter 16 weist entlang der Längsachse jeweils ein Ende 92, 94 auf. Dabei ist jeweils eine Verbindungsstrebe 66, 70 an einem der Enden 92, 94 des Zwischenadapters 16 angeordnet. Die Verbindungsstrebe 68 weist jeweils einen gleichen Abstand zu den Verbindungsstreben 66, 70 auf. Die Verbindungsstrebe 68 ist in Bezug auf die Längsachse mittig in dem Zwischenadapter 16 angeordnet. Die mittig angeordnete Verbindungsstrebe 68 weist eine Ausnehmung 96 auf. Die Ausnehmung 96 ist kreisförmig ausgebildet. Die kreisförmig ausgebildete Ausnehmung 96 ist dazu vorgesehen, ein Befestigungselement aufzunehmen, mit dem ein nicht näher dargestellter Wischarmadapter mit einem Wischarm verbunden ist.

Zwischenadapter 18, 20 sind prinzipiell gleich ausgebildet wie der Zwischenadapter 16. Die Zwischenadapter 18, 20 sind zur Kopplung mit dem Wischblattadapter 10 und jeweils einem Wischarmadapter 24, 26 in einer weiteren Größe vorgesehen. Seitenwände 32, 34, 36, 38 der Zwischenadapter 18, 20 weisen einen gleichen Abstand zueinander auf wie die Seitenwände des Zwischenadapters 16, wodurch eine Kopplung mit dem Wischblattadapter 10 gewährleistet ist. Mittelstücke 62, 64 der Zwischenadapter 18, 20 sind grundsätzlich gleich ausgebildet wie das Mittelstück 60 des Zwischenadapters 16. Dabei ist es grundsätzlich denkbar, dass Verbindungsstreben 72, 74, 76 des Mittelstücks 62 des Zwischenadapters 18 und/oder Verbindungsstreben 78, 80, 82 des Mittelstücks 64 des Zwischenadapters 20 andere Breiten und Höhen aufweisen als die Verbindungsstreben 66, 68, 70 des Zwischenadapters 16. Die Seitenwände 32, 34, 36, 38 bilden ebenfalls Erhebungen 44, 46, 48, 50 aus, die jeweils an einer Außenseite der Seitenwände 32, 34, 36, 38 angebracht sind. Die Erhebungen 44, 46, 48, 50 sind als Vertikalstreben ausgebildet. Zur Anpassung an die verschiedenen Größen der Wischarmadapter 24, 26 sind die als Vertikalstreben ausgebildeten Erhebungen 44, 46, 48, 50 der Zwischenadapter 18, 20 größer ausgebildet. Dabei ist ein Abstand von einem Ende der Erhebungen 44, 46, 48, 50 zu der Außenseite der entsprechenden Seitenwand 32, 34, 36, 38 unterschiedlich. Des Weiteren kann eine Aufnahme 54, 56 der Zwischenadapter 18, 20 zur Aufnahme des Befestigungselements 58 einen anderen Durchmesser aufweisen.

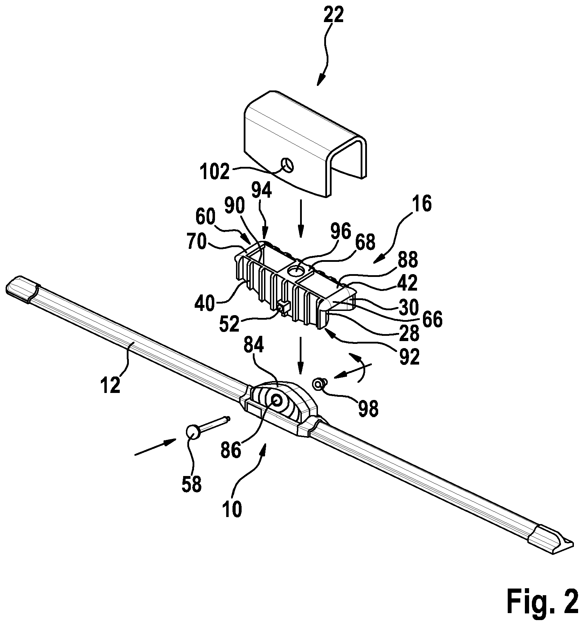

Figur 2 zeigt ein Wischblattsystem mit dem erfindungsgemäßen Wischblattadaptersystem in einer Explosionsdarstellung. Das gelenkfreie Wischblatt 12 soll mit seinem Wischblattadapter 10 an dem Wischarmadapter 22 angebracht werden. Da Dimensionen des Wischarmadapters 22 zu groß für den Wischblattadapter 10 sind, wird der Zwischenadapter 16 zwischen dem Wischblattadapter 10 und dem Wischarmadapter 22 platziert. Der Zwischenadapter 16 wird auf den Wischblattadapter 10 aufgesetzt, so dass die Aufnahme 52 des Zwischenadapters 16 mit der Aufnahme 86 des Wischblattadapters 10 fluchtet. Dabei liegen die Innenflächen 88, 90 des Zwischenadapters 16 an den Außenflächen des Wischblattadapters 10 an. Der Wischarmadapter 22 wird auf den Zwischenadapter 16 aufgesetzt. Innenseiten des Wischarmadapters 22 liegen an den Erhebungen 40, 42 des Zwischenadapters 16 an. Die Aufnahmelöcher 102 des Wischarmadapters 22 sind fluchtend mit der Aufnahme 52 des Zwischenadapters 16 und der Aufnahme 86 des Wischblattadapters 10 ausgerichtet. Das Befestigungselement 58, das als eine Schraube ausgebildet ist, wird durch die Aufnahmelöcher 102 des Wischarmadapters 22 geschoben, wodurch der Wischblattadapter 10 und der Zwischenadapter 16 ebenfalls aufgenommen sind. Das als Mutter ausgebildete Befestigungselement 98 wird auf ein Ende des als Schraube ausgebildeten Befestigungselements 58 aufgeschraubt, wodurch der Wischarmadapter 22 verliersicher mit dem Wischblattadapter 10 und somit dem Wischblatt 12 verbunden ist. Eine Montage des Wischblatts 12 mit seinem Wischblattadapter 10 an den weiteren Wischarmadaptern 24, 26 erfolgt mittels des entsprechenden Zwischenadapters 18, 20 identisch zu der oben beschriebenen Montage. Eine Montage des Wischblattadapters 10 an weitere Wischarmadapter kann mittels in ihrer Größe angepasster weiterer Zwischenadapter erfolgen.

## Patentansprüche

1. Wischblattadaptersystem mit einem Wischblattadapter (10) eines gelenkfreien Wischblatts (12), der zur Kopplung mit einem Wischarmadapter (14) zumindest einer ersten Größe vorgesehen ist mit wenigstens einen Zwischenadapter (16, 18, 20), der zur Kopplung mit dem Wischblattadapter (10) und zur Kopplung mit einem Wischarmadapter (22, 24, 26) zumindest einer zweiten Größe vorgesehen ist, **dadurch gekennzeichnet, dass** der Zwischenadapter (16, 18, 20) zumindest eine Seitenwand (28, 30, 32, 34, 36, 38) aufweist, die zumindest eine Erhebung (40, 42, 44, 46, 48, 50) ausbildet und als eine Vertikalstrebe ausgebildet ist.

2. Wischblattadaptersystem nach Anspruch 1, **dadurch gekennzeichnet, dass** der Zwischenadapter (16, 18, 20) dazu vorgesehen ist, den Wischblattadapter (10) in zumindest zwei Richtungen zu umschließen.

3. Wischblattadaptersystem nach Anspruch 1 oder 2, **dadurch gekennzeichnet, dass** der Zwischenadapter (16, 18, 20) dazu vorgesehen ist, den Wischblattadapter (10) in zumindest drei Richtungen zu umschließen.

4. Wischblattadaptersystem zumindest nach Anspruch 1, **dadurch gekennzeichnet, dass** die zumindest eine Seitenwand (28, 32, 36) des Zwischenadapters (16, 18, 20) eine Aufnahme (52, 54, 56) aufweist, die dazu vorgesehen ist, in einem montierten Zustand ein Befestigungselement (58) aufzunehmen.

5. Wischblattadaptersystem nach einem der vorhergehenden Ansprüche, **dadurch gekennzeichnet, dass** der Zwischenadapter (16, 18, 20) zumindest ein Mittelstück (60, 62, 64) aufweist, das den Zwischenadapter (16, 18, 20) in Richtung des Wischarmadapters (22, 24, 26) begrenzt.

6. Wischblattadaptersystem nach Anspruch 5, **dadurch gekennzeichnet, dass** das Mittelstück (60, 62, 64) aus drei Verbindungsstreben (66, 68, 70, 72, 74, 76, 78, 80, 82) gebildet ist, die die zumindest eine Seitenwand (28, 32, 36) und eine weitere Seitenwand (30, 34, 38) des Zwischenadapters (16, 18, 20) miteinander verbinden.

7. Wischblattadaptersystem nach einem der vorhergehenden Ansprüche, **dadurch gekennzeichnet, dass** der Wischblattadapter (10) zur Verbindung mit dem Wischarmadapter (14) zumindest eine Aufnahme (86) aufweist, die dazu vorgesehen ist, das Befestigungselement (58) aufzunehmen.

8. Zwischenadapter (16, 18, 20) eines Wischblattadaptersystems nach einem der vorhergehenden Ansprüche wobei der Zwischenadapter zumindest eine Seitenwand (28,30,32,34,36,38) aufweist, die zumindest eine Erhebung (40,42,44,46,48,50) ausbildet und als eine Vertikalstrebe ausgebildet ist.

9. Wischblattsystem mit einem gelenkfreien Wischblatt (12) und mit einem Wischblattadaptersystem nach einem der Ansprüche 1 bis 9.

## Claims

1. Wiper blade adapter system with a wiper blade adapter (10) of a joint-free wiper blade (12), said wiper blade adapter being provided for coupling to a wiper arm adapter (14) at least of a first size with at least one intermediate adapter (16, 18, 20) which is provided for coupling to the wiper blade adapter (10) and for coupling to a wiper arm adapter (22, 24, 26) at least of a second size, **characterized in that** the intermediate adapter (16, 18, 20) has at least one side wall (28, 30, 32, 34, 36, 38) which forms at least one elevation (40, 42, 44, 46, 48, 50) and is in the form of a vertical strut.

2. Wiper blade adapter system according to Claim 1, **characterized in that** the intermediate adapter (16, 18, 20) is provided to surround the wiper blade adapter (10) in at least two directions.

3. Wiper blade adapter system according to Claim 1 or 2, **characterized in that** the intermediate adapter (16, 18, 20) is provided to surround the wiper blade adapter (10) in at least three directions.

4. Wiper blade adapter system at least according to Claim 1, **characterized in that** the at least one side wall (28, 32, 36) of the intermediate adapter (16, 18, 20) has a receptacle (52, 54, 56) which is provided, in a mounted state, to receive a fastening element (58).

5. Wiper blade adapter system according to one of the preceding claims, **characterized in that** the intermediate adapter (16, 18, 20) has at least one central piece (60, 62, 64) which bounds the intermediate adapter (16, 18, 20) in the direction of the wiper arm adapter (22, 24, 26).

6. Wiper blade adapter system according to Claim 5, **characterized in that** the central piece (60, 62, 64) is formed from three connecting struts (66, 68, 70, 72, 74, 76, 78, 80, 82) which connect the at least one side wall (28, 32, 36) and a further side wall (30, 34, 38) of the intermediate adapter (16, 18, 20) to each other.

7. Wiper blade adapter system according to one of the preceding claims, **characterized in that** for connection to the wiper arm, adapter (14), the wiper blade adapter (10) has at least one receptacle (86) which is provided for receiving the fastening element (58).

8. Intermediate adapter (16, 18, 20) of a wiper blade adapter system according to one of the preceding claims, wherein the intermediate adapter has at least one side wall (28, 30, 32, 34, 36, 38) which forms at least one elevation (40, 42, 44, 46, 48, 50) and is in the form of a vertical strut.

9. Wiper blade system with a joint-free wiper blade (12) and with a wiper blade adapter system according to one of Claims 1 to 9.

## Revendications

1. Système adaptateur de balai d'essuie-glace comprenant un adaptateur de balai d'essuie-glace (10) d'un balai d'essuie-glace (12) sans articulation, qui est prévu pour être accouplé à un adaptateur de bras d'essuie-glace (14) d'au moins une première taille, comprenant au moins un adaptateur intermédiaire (16, 18, 20) qui est prévu pour être accouplé à l'adaptateur de balai d'essuie-glace (10) et pour être accouplé à un adaptateur de bras d'essuie-glace (22, 24, 26) d'au moins une deuxième taille, **caractérisé en ce que** l'adaptateur intermédiaire (16, 18, 20) présente au moins une paroi latérale (28, 30, 32, 34, 36, 38) qui constitue au moins un rehaussement (40, 42, 44, 46, 48, 50) et qui est réalisée sous forme d'entretoise verticale.

2. Système adaptateur de balai d'essuie-glace selon la revendication 1, **caractérisé en ce que** l'adaptateur intermédiaire (16, 18, 20) est prévu pour entourer l'adaptateur de balai d'essuie-glace (10) dans au moins deux directions.

3. Système adaptateur de balai d'essuie-glace selon la revendication 1 ou 2, **caractérisé en ce que** l'adaptateur intermédiaire (16, 18, 20) est prévu pour entourer l'adaptateur de balai d'essuie-glace (10) dans au moins trois directions.

4. Système adaptateur de balai d'essuie-glace au moins selon la revendication 1, **caractérisé en ce que** l'au moins une paroi latérale (28, 32, 36) de l'adaptateur intermédiaire (16, 18, 20) présente un logement (52, 54, 56) qui est prévu pour recevoir un élément de fixation (58) dans un état monté.

5. Système adaptateur de balai d'essuie-glace selon l'une quelconque des revendications précédentes, **caractérisé en ce que** l'adaptateur intermédiaire (16, 18, 20) présente au moins une pièce intermédiaire (60, 62, 64) qui limite l'adaptateur intermédiaire (16, 18, 20) dans la direction de l'adaptateur de bras d'essuie-glace (22, 24, 26).

6. Système adaptateur de balai d'essuie-glace selon la revendication 5, **caractérisé en ce que** la pièce intermédiaire (60, 62, 64) est formée de trois entretoises de liaison (66, 68, 70, 72, 74, 76, 78, 80, 82) qui relient l'une à l'autre l'au moins une paroi latérale (28, 32, 36) et une paroi latérale supplémentaire (30, 34, 38) de l'adaptateur intermédiaire (16, 18, 20).

7. Système adaptateur de balai d'essuie-glace selon l'une quelconque des revendications précédentes, **caractérisé en ce que** l'adaptateur de balai d'essuie-glace (10) présente, pour la connexion à l'adaptateur de bras d'essuie-glace (14), au moins un logement (86) qui est prévu pour recevoir l'élément de fixation (58).

8. Adaptateur intermédiaire (16, 18, 20) d'un système adaptateur de balai d'essuie-glace selon l'une quelconque des revendications précédentes, l'adaptateur intermédiaire présentant au moins une paroi latérale (28, 30, 32, 34, 36, 38) qui constitue au moins un rehaussement (40, 42, 44, 46, 48, 50) et qui est réalisée sous forme d'entretoise verticale.

9. Système de balai d'essuie-glace comprenant un balai d'essuie-glace (12) sans articulation et un système adaptateur de balai d'essuie-glace selon l'une quelconque des revendications 1 à 9.
